# EUROPEAN PATENT SPECIFICATION

(11) **EP 4 270 133 B1**
(45) Date of publication and mention of the grant of the patent: **28.01.2026**
(21) Application number: 22169751.9
(22) Date of filing: 25.04.2022
(51) Int. Cl.: G05D 1/00

(54) **CONTROLLING OPERATION OF A WORK MACHINE**
STEUERUNG DES BETRIEBES EINER ARBEITSMASCHINE
CONTRÔLE DU FONCTIONNEMENT D'UNE MACHINE DE TRAVAIL

(43) Date of publication of application: 01.11.2023
(73) Proprietor: Sandvik Mining and Construction Oy, 33330 Tampere (FI)
(72) Inventor: CUMINI, Lauso, 33330 Tampere (FI); PAJALA, Esa, 33311 Tampere (FI); AALTO, Tommi, 33330 Tampere (FI); LAHTINEN, Juha, 33330 Tampere (FI); HERRALA, Juha, 33330 Tampere (FI)
(74) Representative: Sandvik

(56) References cited:
- EP-A1- 3 040 508
- WO-A1-2015/187081
- US-A1- 2006 249 321
- US-A1- 2022 042 283
- US-B1- 9 593 463

## Description

### Field

The present application relates to controlling operation of a work machine. More specifically, the present application relates to controlling of a work machine operating in an isolated operating area.

### Background

In some operating areas, there may be work machines being operated that are capable of causing severe damage if not operated properly. The damage may be caused to personnel, to other work machines, to the environment itself and so on. Therefore, in order to improve safety, an operating area may be divided by isolating some parts of the operating area and allowing operations there in a restricted manner. The restrictions may be regarding the type of work machines, the type of operations or regarding any other applicable aspect.

US2006249321 discloses a method, system and access station for passage control of mine vehicles. Mine vehicles are transferred between an operation area and a manual area through one or more access stations between which there is an intermediate space, to which the mine vehicle to be transferred can be driven. When the mine vehicle is in the intermediate space, at least one access gate is closed.

WO2015/187081 discloses a safety system that is configured such that safety zones for automated operation of mining vehicles may be defined within the work area via an interface, wherein each safety zone is associated with barrier control units arranged at all the entrances to the respective safety zone and an identification key, with which the at least one mining vehicle may be checked-in for automated operation in the respective safety zone and/or checked-out from the respective safety zone, without reconfiguration of the safety system.

### Brief Description

The scope of protection sought for various embodiments of the invention is set out by the independent claims. The example embodiments and features, if any, described in this specification that do not fall under the scope of the independent claims are to be interpreted as examples useful for understanding various embodiments of the invention.

According to a first aspect there is provided an apparatus for controlling operation of a work machine connected to a first safety system configured to monitor safety of an isolated operating area and provide an indication to all the work machines within the isolated operating area to perform a safety operation, the work machine comprising a second safety system configured to monitor a pre-determined volume surrounding, at least partly, the work machine operating in the isolated operating area, the apparatus comprising means for: receiving the indication, from the first safety system associated with the isolated operating area, that the safety operation is to be performed for the work machine operating in the isolated operating area, determining, in response to receiving the indication, a status of the second safety system associated with the work machine operating in the isolated operating area, determining, based on the safety operation and the status of the second safety system associated with the work machine, an adapted safety operation, and controlling operation of the work machine based on the adapted safety operation.

In some exemplary embodiments according to the first aspect, the means comprises at least one processor, and at least one memory, including a computer program code, wherein the at least one memory and the computer program code are configured, with the at least one processor, to cause the performance of the apparatus.

According to a second aspect there is provided an apparatus for controlling operation of a work machine connected to a first safety system configured to monitor safety of an isolated operating area and provide an indication to all the work machines within the isolated operating area to perform a safety operation, the work machine comprising a second safety system configured to monitor a pre-determined volume surrounding, at least partly, the work machine operating in the isolated operating area, the apparatus comprising at least one processor, and at least one memory including a computer program code, wherein the at least one memory and the computer program code are configured, with the at least one processor, to cause the apparatus to: receive the indication, from the first safety system associated with the isolated operating area, that the safety operation is to be performed for the work machine operating in the isolated operating area, determine, in response to receiving the indication, a status of the second safety system associated with the work machine operating in the isolated operating area, determine, based on the safety operation and the status of the second safety system associated with the work machine, an adapted safety operation, and control operation of the work machine based on the adapted safety operation.

According to a third aspect there is provided a method for controlling operation of a work machine connected to a first safety system configured to monitor safety of an isolated operating area and provide an indication to all the work machines within the isolated operating area to perform a safety operation, the work machine comprising a second safety system configured to monitor a pre-determined volume surrounding, at least partly, the work machine operating in the isolated operating area, the method comprising: receiving the indication, from the first safety system associated with the isolated operating area, that the safety operation is to be performed for the work machine operating in the isolated operating area, determining, in response to receiving the indication, a status of the second safety system associated with the work machine operating in the isolated operating area, determining, based on the safety operation and the status of the second safety system associated with the work machine, an adapted safety operation, and controlling operation of the work machine based on the adapted safety operation.

In some example embodiments according to the third aspect, the method is a computer-implemented method.

According to a fourth aspect there is provided a computer program comprising instructions for causing an apparatus controlling operation of a work machine connected to a first safety system configured to monitor safety of an isolated operating area and provide an indication to all the work machines within the isolated operating area to perform a safety operation, the work machine comprising a second safety system configured to monitor a pre-determined volume surrounding, at least partly, the work machine operating in the isolated operating area to perform at least the following: receive the indication, from the first safety system associated with the isolated operating area, that the safety operation is to be performed for the work machine operating in the isolated operating area, determine, in response to receiving the indication, a status of the second safety system associated with the work machine operating in the isolated operating area, determine, based on the safety operation and the status of the second safety system associated with the work machine, an adapted safety operation, and control operation of the work machine based on the adapted safety operation.

According to a fifth aspect there is provided a computer program comprising instructions stored thereon for performing at least the following: receiving an indication, from a first safety system associated with the isolated operating area, that a safety operation is to be performed for the work machine operating in the isolated operating area, determining, in response to receiving the indication, a status of a second safety system associated with the work machine, determining, based on the safety operation and the status of the second safety system associated with the work machine, an adapted safety operation, and controlling operation of the work machine based on the adapted safety operation.

According to a sixth aspect there is provided a non-transitory computer readable medium comprising program instructions for causing an apparatus controlling operation of a work machine connected to a first safety system configured to monitor safety of an isolated operating area and provide an indication to all the work machines within the isolated operating area to perform a safety operation, the work machine comprising a second safety system configured to monitor a pre-determined volume surrounding, at least partly, the work machine operating in the isolated operating area to perform at least the following: receive the indication, from the first safety system associated with the isolated operating area, that the safety operation is to be performed for the work machine operating in the isolated operating area, determine, in response to receiving the indication, a status of the second safety system associated with the work machine operating in the isolated operating area, determine, based on the safety operation and the status of the second safety system associated with the work machine, an adapted safety operation, and control operation of the work machine based on the adapted safety operation.

According to a seventh aspect there is provided a non-transitory computer readable medium comprising program instructions stored thereon for performing at least the following: receiving an indication, from a first safety system associated with the isolated operating area, that a safety operation is to be performed for the work machine operating in the isolated operating area, determining, in response to receiving the indication, a status of a second safety system associated with the work machine, determining, based on the safety operation and the status of the second safety system associated with the work machine, an adapted safety operation, and controlling operation of the work machine based on the adapted safety operation.

### List of Drawings

In the following, the invention will be described in greater detail with reference to the embodiments and the accompanying drawings, in which
FIG. 1A illustrates an example embodiment of an operating area.
FIG. 1B illustrates an example embodiment of a passage control unit.
FIG. 2 illustrates an example embodiment of a safety system.
FIG. 3 illustrates a flow chart according to an example embodiment.
FIG. 4 illustrates an example embodiment of an isolated operating area with a two-layered safety system.
FIG. 5 illustrates an example embodiment of an apparatus

### Description of Embodiments

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

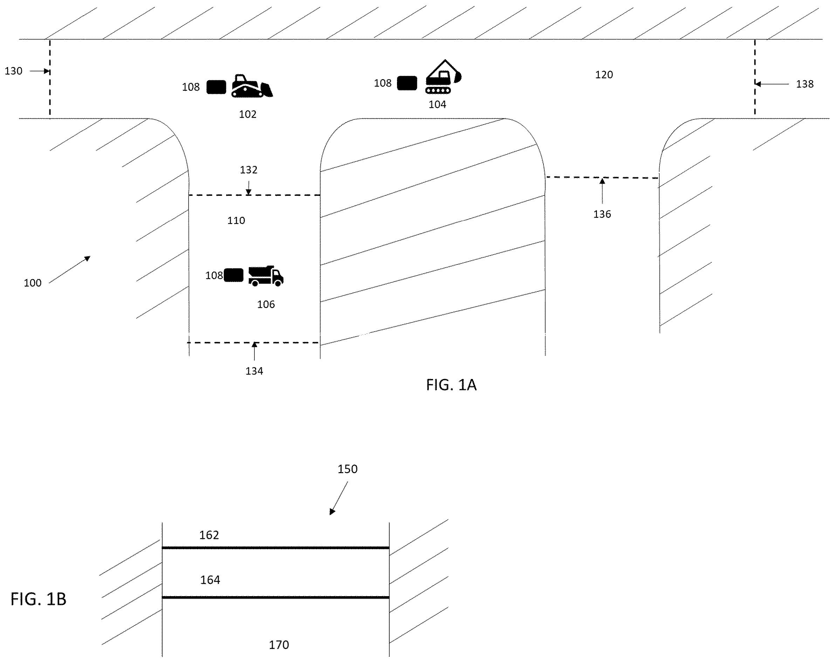

FIG. 1A illustrates an example embodiment of an operating area 100. An operating area may be understood as an area within which industrial operations may be performed. It is to be noted that an operating area may also be understood as a working area. The operating area 100 may be a geographically limited area with restricted access. The operating area 100 may be located within a building, it may be an underground area and/or an area outside above the ground surface. Examples of an operating area, such as the operating area 100, comprise a mine, a roadwork site, a railroad worksite, and a terminal for handling cargo.

As the operating area 100 is an area for industrial operations, there may be machines 102, 104, 106 for industrial operations operating within the operating area. The machines 102, 104, 106 may be mobile meaning that the machines may move within the operating area 100. In some example embodiments, at least some of the machines 102, 104 and 106 may be partially or fully automated machines that are capable of performing operations autonomously without, or with limited, control from a user, that may be a person working in the operating area 100. It is to be noted though that for example due to safety aspects, an automated, or partially automated work machine may be taken into control by an external entity at any time. The external entity may be for example a user or a safety system or any other suitable external entity. Examples of work machines, such as the work machines 102, 104 and 106, comprise trucks, bulldozers, dumpers, vans, rock drilling or milling rigs, gantry cranes, mobile reinforcement machines, mechanical cutting machines and loaders or any other kind of work machines suitable for performing an operation within the operating area 100.

A work machine, such as work machine 102, 104 or 106, may be associated with a safety system that is configured to perform safety monitoring in view of the work machine. Thus, the safety system associated with the work machine may be understood as a machine-based safety system. An example of such a machine-based safety system is illustrated in the FIG. 1A as 108. Although the work machines 102, 104 and 106 are in this example embodiment associated with their respective machine-based safety systems 108, in some other example embodiments there may be work machines in the operating area 100 that are not associated with a machine-based safety system. Further, in some example embodiments, none of the work machines located in the operating area 100 may be associated with a respective machine-based safety system. The machine-based safety system 108 may be configured to stop some or all operations of its associated work machine upon detecting a mobile object or movement of the mobile object that causes one or more safety measures, such as a safety operation of activating brakes of the work machine, to be activated. The detecting may also be understood as sensing and the detecting may be achieved using one or more sensors, such as lasers and/or cameras, comprised in the machine-based safety system. It is to be noted that in some example embodiments, the machine-based safety system 108 may be configured to perform evaluation of the detected mobile object or movement of the mobile object and based on the evaluation, may determine one or more operations that are being performed by the work machine and that are to be stopped and, optionally, one or more operations being performed by the work machine that may still continue, thereby enabling adaptive response to the detected mobile object to movement of the mobile object causing the safety measures to be activated. It is further to be noted that the machine-based safety system 108 may be configured to monitor vicinity of the work machine it is associated with. Vicinity may be understood as a pre-determined volume surrounding, at least partly, the work machine the machine-based safety system is associated with. Optionally, the machine-based safety system 108 may be connected to other systems as well using any suitable connection, such as wireless connection.

The operating area 100 may further be divided into different areas such as areas 110 and 120, which may be understood as zones within the operating area 100. By dividing the operating area 100 into smaller areas, there may an advantage that some operations may be limited to certain area and/or access may be limited to some parts of the operating area 100. Thus, at least one of the areas 110 and 120 may be understood as an isolated operating area. An isolated operating area may be isolated due to safety reasons for example. In some example embodiments, automated work machines may be located within an isolated operating area thus allowing improving of safety of operations as people and/or manual work machines operated by people, can be kept isolated from the automated work machines.

According to an example, embodiment, an isolated operating area comprises an area reserved for operation of at least one automated work machine such that access by outsiders and other vehicles into the isolated working area is prevented in order to avoid a risk of collision. An isolated working area may be assigned to a particular type of work machines such as autonomously operating work machines or manually operated work machines.

The isolated working area may be isolated using one or more passage control units that comprise a mechanism configured to perform passage control. A passage control unit may comprise for example an electronic access barrier. Alternatively, in some other example embodiments, any other suitable passage control mechanism may be utilized in a passage control unit. The one or more passage control units may be comprised in an area-based safety system that is configured to monitor safety of the isolated operating area.

According to an example embodiment, a passage control unit may be an optoelectronic guard detector, such as a guard detector based on the use a light curtain or photocells. Alternatively other kind of devices such as laser scanning devices and safety mats, may be utilized to detect movement of a mobile object. A passage control unit may, in some example embodiments, be configured to detect the direction of motion of the mobile object. For example, the passage control unit may detect if the mobile object is entering or exiting the isolated working area.

In the example of FIG. 1A, there are electronic access barriers 130, 132, 136 and 138 which isolate the area 120. As the area 120 is isolated, passage to and from the area 120 is controlled by the electronic access barriers 130, 132, 136 and 138. The area 120 may be dedicated, for example, to autonomously operating work machines. Correspondingly, the electronic access barriers 132 and 134 form limits that isolate the area 110. The area 110 may be isolated for example for work machines that are controlled remotely. It is to be noted that the isolated areas may be isolated for any purpose that benefits from there being a control for entering and exiting the area. It is also to be noted that the electronic access barriers 130, 132, 134, 136 and 138 may also be configured to allow the work machines 102, 104 and 106 to safely operate within the areas limited using the electronic access barriers 130, 132, 134 and 136. The example embodiment of FIG. 1 is to be understood as a simplified example of an operating area and in some other example embodiments, there may be additional units, sub-systems or elements. Further, in different example embodiments, the layout of the operating area may be different, and the layout of an operating area may also change over time.

FIG. 1B illustrates an example embodiment of a passage control unit such as passage control units 130, 132, 134, 136 and/or 138. The passage control unit may be comprised in an area-based safety system. In this example embodiment, there is a passage control unit located in a corridor 150 of an operating area. The passage control unit comprises two monitoring units 162 and 164 that together form the passage control unit. The monitoring units 162 and 164 are placed at a pre-determined distance from each other and the monitoring unit 162 is for monitoring entrance to the area 170 and the monitoring unit 164 is to monitor exiting from the area 170, which is an isolated area comprised in the operating area. The pre-determined distance may be determined for example such that if a work machine is detected to unintentionally enter or exit through the passage control unit, the gate that first detects the work machine may trigger a stop command to the work machine and the distance between the monitoring units 162 and 164 is sufficient for the work machine to stop moving with respect to its location. In other words, the work machine is prevented from reaching the second gate. For example, if a work machine is to exit the isolated operating area 170, the monitoring unit 164 detects the corresponding movement of the work machine and if a moving object is to enter the isolated operating area, then the monitoring unit 162 detects the movement of the moving object. By having two monitoring units 162 and 164 at such a pre-determined distance between each other may have a benefit of helping to prevent a work machine accidentally proceeding to the area on the other side of the passage control unit thereby preventing accidents as well. The monitoring units 162 and 164 may comprise for example a gate switch that is configured to recognize if a gate is open of closed or they may comprise light curtains using laser-based detection of movement.

It is to be noted that although in the example embodiment of FIG. 1B there are two monitoring units 162 and 164, in some example embodiments one monitoring unit may be sufficient. For example, if the corridor 150 is capable of physically preventing a work machine exiting from the area, then it may be enough to have one monitoring unit for monitoring a mobile object that is moving and is about to enter the isolated operating area 170 for which the passage control unit is performing monitoring.

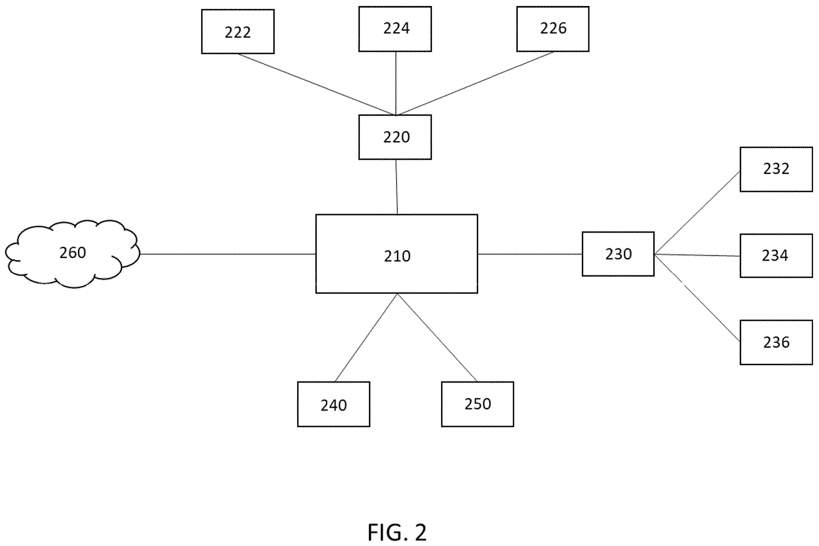

FIG. 2 illustrates a safety system that is an area-based safety system. The safety system may be used for example with an isolated operating area such as areas 110 or 120 illustrated in the example embodiment of FIG. 1. The safety system comprises a control unit 210, which may be understood as a logical unit that comprises at least one controller. The control unit 210 is connected to functional units 220-250. It is to be noted that in some other example embodiments there may be different number of functional units the control unit 210 is connected to. The functional units 222, 224, 226, 232, 234, and 236 in this example embodiment are passage control units such as electronic access barriers 130, 132, 134, 136 and 138 in the example of FIG. 1A. These functional units may be configured to detect movement to or from an isolated operating area. The movement may be caused for example by a mobile object such as a person, by a work machine or any other mobile object. The movement of the mobile object may be detected based on any suitable technology, for example, by a light curtain having one or more laser transmitters transmitting a laser beam across the passage-controlled part of the operating area. The transmitted lasers are then correspondingly received by a receiver. The area-based safety system is configured to receive an indication in case the laser is not received by the receiver as expected and thus the indication may be interpreted, by the control unit 210 to indicate movement to or from an isolated operating area. The control unit 210 is configured to then determine a corresponding action. For example, the control unit 210 may be configured to send an indication to all work machines within the operating area requesting them to perform a safety operation such as stopping and preventing movement of the work machine. Further, the control unit 210 may be connected over any suitable network 260 to other devices and may also be configured to provide an indication of the detected movement to one or more other devices using the network 260.

In this example embodiment, the detection of movement of a mobile object may be understood to comprise at least one of the following events: a) the mobile object is moving close to the passage control unit and intending to enter into the zone; b) the mobile object holds still close to the passage control unit and is waiting to enter into the zone; c) the mobile object has actually already passed the passage control unit and entered into the zone. The stage of the detection may depend on the applied technology and/or configuration of the passage control units. A passage control unit may, in some example embodiments, be configured to detect the direction of motion of the mobile object and may also be configured to provide the direction information to the control unit 210.

Additionally, the safety system may further comprise functional units that comprise identification units 230, 220. The identification units 220, 230 may be configured to identify the mobile object entering or exiting the isolated operating area. The identification of the mobile objects may include the identification of the type of the mobile object, such as if the mobile object is an automated mobile vehicle, an unmanned remotely controllable mobile vehicle or a manned mining vehicle, or a human being. The identification of the mobile object may optionally further comprise the identifying of a particular person within a vehicle. The identification units 220, 230 may further be configured to provide an indication regarding the mobile object and/or the identified person to the control unit 210.

In some example embodiment, an identification unit may comprise for example a reader device, such as an RFID scanner, or a camera. For example, the RFID scanner may be able to read an RFID tag comprised in the mobile object, based on which the mobile object may be identified. Alternatively, in some example embodiments, the identification unit may also be a device which is able to identify the mobile object without any counterpart identification element comprised in the mobile object. For example, the identification unit may comprise a device that provides a connection with a control unit of the mobile object and receives an identifier from the mobile object via a network connection such as wireless local area network (WLAN), for example. In yet another example embodiment, the identification unit may be configured to provide identification information, such as an image of the mobile object, to the control unit 210, and the control unit 210 may be configured to then perform the identification of the mobile object based on the received image.

In this example embodiment, the safety system further comprises functional units 240 and 250 that comprise indication units. An indication unit may be comprised in a passage control unit in some other example embodiments. The indication units 240 and 250 may be configured to indicate further control information for the mobile object to enter into or exit from the isolated operating area.

The safety system illustrated in this example embodiment may further comprise communication links between the functional units. The communication links may be established as unidirectional or bidirectional communication link. The communication links may be based on any suitable technology. For example, the communication link may be based on a wireless local area networking, such as IEEE 802.11 or 802.16 based communications is applied.

The safety system of this example embodiment may also be connected to a control unit that is comprised in a work machine located in the isolated operating area. Thus, centralized safety control may be applied within the isolated operating area. In some example embodiments, it may be a pre-requisite for a work machine to enter into the isolated operating area that it is connected to the safety system. For example, the safety system may be configured to transmit the indication for the safety operation to be performed to the work machine located in the isolated operating area.

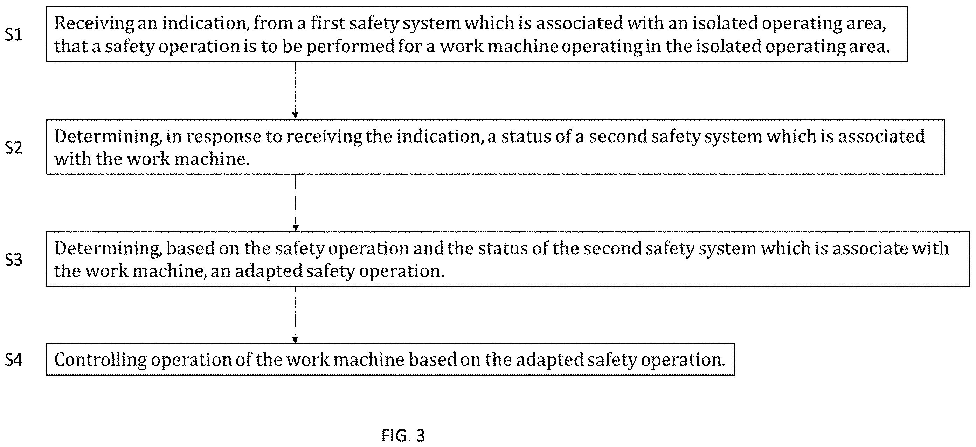

FIG. 3 illustrates a flow chart according to an example embodiment. A method may be performed, wherein the method implements the flow chart of FIG. 3. The method may be a computer-implemented method implemented using an apparatus that comprises at least one processor and at least one memory including computer program code and the at least one memory and the computer program code are configured to cause the apparatus to perform the method. In this example embodiment, there is first block S1 that comprises receiving an indication, from a first safety system associated with an isolated operating area, that a safety operation is to be performed for a work machine operating in the isolated operating area. The first safety system may be, for example, an area-based safety system that is configured to monitor an entrance to the isolated operating area such as the safety system described in the example embodiment of FIG. 2. The isolated operating area may be any suitable operating area that forms an isolated area within a larger area, which may be a larger operating area. The isolated operating area may be for example an area to which entrance is controlled. The controlled entrance may be implemented in any suitable manner and in some example embodiments may be controlled using electronic access barriers, which may be comprised in the first safety system. A safety operation may be determined by the safety system and may be any suitable operation that is performed to ensure safety. For example, a safety operation may be an operation that stops and prevents all movement and operation of the work machine that is located within the isolated operating area. The work machine may be an automated work machine, or it may be a work machine that is controlled by a user either remotely or at the physical location of the work machine. It is to be noted that there may be more than one work machine present in the isolated operating area being associated to the first safety system and that the indication may be received by some, or all of the work machines located within the isolated operating area. In general, a work machine may be considered to be associated with the first safety system for example if the work machine is connected to the first safety system such that it is capable of receiving indications from the safety system. The connection may be formed in any suitable manner, for example wirelessly. As a further example, the wireless connection may be based on WLAN.

Next, in this example embodiment, there is block S2 that comprises determining, in response to receiving the indication, a status of a second safety system which is associated with the work machine. The second safety system associated with the work machine may be a machine-based safety system configured to sense movement of a mobile object in the vicinity of the work machine. It may for example detect any movement closer than a threshold distance from the work machine. The second safety system may be comprised in or connected to the work machine and may use for example a three-dimensional (3D) point cloud for monitoring the environment around the work machine. The status of the second safety system may indicate if the vicinity of the work machine allows to safely continue at least some operations of the work machine. For example, the status may indicate that the status of the machine-based safety system is active or, alternatively, the status of the machine-based safety system is inactive. The active status may be associated with an indication that operation may be continued at least partly. Further, the inactive status may indicate that the second safety monitoring is not monitoring the vicinity of the work machine. It is to be noted that the first safety system, that may be an area-based safety system, and the second safety system, that may be a machine-based safety system, may be independent of each other in the sense that they are configured to function independently. As such, although there may be a connection between the first safety system and the second safety system, the first safety system and the second safety system are configured to function independently as well.

Next, in this example embodiment, there is block S3, which comprises determining, based on the safety operation and the status of the second safety system associated with the work machine, an adapted safety operation. An adapted safety operation may be understood as an operation that may correspond to the safety operation or it may correspond to the safety operation partly, or it may be a different operation. For example, if the safety operation comprises stopping and preventing all the operations of the work machine, the adapted safety operation may stop and prevent some operations of the work machine, but not all the operations of the work machine. Alternatively, the adapted safety operation may be determined to correspond to the safety operation. Finally, in this example embodiment there is block S4, which comprises controlling operation of the work machine based on the adapted safety operation.

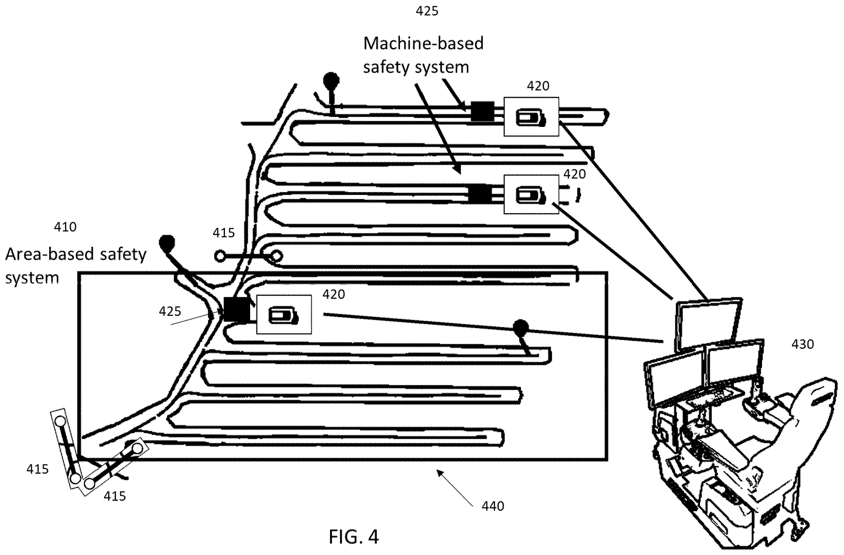

FIG. 4 illustrates an example embodiment with a first safety system 410 and a second safety system 425. In this example embodiment, the first safety system 410 is an area-based safety system, and the first safety system comprises electronic access barriers 415, while the second safety system 425 is a machine-based safety system. The electronic access barriers 415 may be implemented in any suitable manner, for example by using laser-based light curtains, as described in the example embodiment of FIG. 2, and there may be a plurality of light curtains comprised in a one access barrier 415. The operating area in this example embodiment is an underground working area, but it is to be noted that in some other example embodiments the operating area may be different than an underground working area. The underground working area may be a mine although in some example embodiments it may also be another type of working area that has been built at least partly underground.

In this example embodiment, the electronic access barriers 415 enable an isolated operating area 440 to be formed such that access to it is controlled using the electronic access barriers 415. By having the isolated operating area 440, there may be one or more automated work machines operating in the isolated operating area and for example, due to safety reasons, no personnel or any other work machines are allowed to enter the isolated operating area. In this example embodiment, in the isolated operating area 440 there is also one work machine 420 that is not fully automated. In this example embodiment, the work machine 420 located in the isolated operating area 440 is a remotely controlled work machine. Further, there may be various types of work machines that are remotely controlled. In this example embodiment, the remotely controlled work machine 420, that is located within the isolated operating area 440, is a drilling machine such as a rock drilling machine. It is also to be noted that although there is, in the isolated operating area 440, one remotely controlled work machine 420 illustrated in FIG. 4, in some other example embodiments there could be more than one remotely controlled work machine 420 located in the isolated operating area 440. The remotely controlled work machines 420 in this example embodiment, whether they are located within the isolated operating area 440 that is monitored by the first safety system 410 or not, are controlled by a control point 430 which may be an apparatus or a system that allows the operation of the work machine 420 to be controlled remotely by a user. The remotely controlled work machines 420 may be controlled by the same control point 430, as is illustrated in FIG. 4, or alternatively, they may be controlled by different control points.

In this example embodiment, the remotely controlled work machines 420 are also associated, respectively, with a second safety system 425, which is a machine-based safety system. Thus, the work machine 420 that is located within the isolated operating area 440 that is associated with the first safety system 410 is also associated with a second safety system 425 that is a machine-based safety system for that work machine 420. The second safety system 425 may be configured to, for example, monitor the vicinity of the work machine 420 such that it is ensured there are no unexpected obstacles such as mobile objects nor movement in the vicinity. In this way the safety can be ensured while the work machine operates. Further, in case the second safety system 425 detects unexpected obstacles or movement, for example by detecting those from a 3D point cloud generated by a lidar associated with the second safety system 425, it may provide an indication of this to the control point 430. For example, the control point 430 may be configured to display an image detected based on the 3D point cloud and thus, the user of the control point 430 may detect the situation in the vicinity of the work machine 420 and optionally also control the operation of the work machine 420 accordingly. Additionally, or alternatively, the second safety system 425 may also be configured to stop and/or prevent at least some operation of the work machine 425 when the second safety system detects unexpected obstacles and/or movement in the vicinity of the work machine 420. It is to be noted that the second safety system 425 is to have a status that is active for the second safety system 425 to be operational. If the status is inactive, the second safety system 425 may be turned off and thus may not be monitoring the vicinity of the work machine 420. The second safety system 425 with which the work machine 420, which is located within the isolated operating area 440, is associated with, may be comprised by the work machine 420, or it may be attached to it, or it may be otherwise operatively connected to it.

The work machine 420 which is located within the isolated operating area 440 is, in this example embodiment, connected to the first safety system 410 as well. The connection may be any suitable connection, such as a wireless network connection. Thus, the safety system 410 is aware of the work machine 420 and is also able to send indications, such as commands, to the work machine 420. Correspondingly, the work machine 420 is configured to receive the indications. For example, it may be a pre-requisite for allowing the work machine 420 to enter the isolated operating area that the work machine 420 is connected to the first safety system 410. As the work machine 420 is connected to both the first safety system 410 and the second safety system 425, it may be understood that there is a two-layered safety monitoring applicable to the work machine 420. Yet, the first safety system 410 and the second safety system 425 may be configured to function independently of each other although they may have a connection. Thus, even if the status of the second safety system 425 would be inactive, due to the connection to the first safety system 410, the work machine 420 may still operate safely as the first safety system 410 may provide safety monitoring that is suitable to meet safety criteria introduced for example in one or more standards.

As the work machine 420 is connected to the first safety system 410, when there is a tripping, in other words, a one of the electronic access barriers 415 indicates a violation of the electronic access barrier 415, the first safety system 410 provides an indication to all the work machines within the isolated operating area. The indication comprises a safety operation that is to be performed by the receiving work machine. For example, the safety operation may be to stop and to prevent all movement and operation of the work machine. Yet, if the status of the second safety system 425 is active, the work machine 420 may be allowed to continue its operation. The operation may however be continued in a limited manner such that some operations may still be continued while some operations are to be stopped and/or prevented. In this example embodiment, the work machine 420 is a drilling machine, such as a rock drilling machine, that is used in the mine, and which is controlled remotely by the control point 430. If the second safety system, which is applicable to the drilling machine, is active, it may be determined that it is enough in terms of safety that the second safety system 425 is relied upon to ensure safe operation of the work machine 420 even though the area-based safety system provided an indication of a safety operation to be performed. Alternatively, it may be determined that it is enough if the operation of the drilling machine is stopped and prevented partly. For example, if the location of the drilling machine is kept as it is, in other words, the change of location of the drilling machine is prevented, then the drilling machine may otherwise continue its operations such as drilling. The second safety system 425 and the remote controlling may be relied on monitoring the safety of the operation and on stopping the operation if it is detected that safety may be compromised in case operation of the drill is continued. If the drilling is continued such that some of the operations are stopped and/or prevented, it may be understood that the operation of the drill is continued in a limited manner and the safety operation indicated by the first safety system 410 is used as an input along with the status of the second safety system 425 to determine an adapted safety operation. The adapted safety operation may be determined by the second safety system 425. The second safety system 425 may be configured to determine the adapted safety operation based on for example pre-determined safety levels that the second safety system 425 is configured to determine to be applicable for different inputs received by sensing the vicinity of the associated work machine 420. The second safety system 425 may comprise for example a tramming gate, which is configured to prevent the work machine 420 from changing its location when that is not safe, and/or an access protector, which may be configured to stop drilling when that is not safe.

Yet, if upon receiving the indication from the first safety system 410 it is determined that the second safety system 425 has its status as not active, in other words, it is not performing safety monitoring, then the safety operation may be determined to be applicable as such to the work machine 420 as well as there is no second layer of safety monitoring ensuring safety if operation is continued. Thus, the adapted safety operation that is determined based on the indication and the status of the second safety system 420 is determined to be the safety operation indicated by the received indication.

Determining the adapted safety operation may be performed automatically by operating system of the work machine 420 or it may be at least partly performed by a user controlling the work machine 420. The operating system may comprise one or more software algorithms that are configured to receive the indication and to also determine the status of the second safety system 425 and then to determine with, or without an input from the user, the adapted safety operation in response to the received indication. The adapted safety operation may be determined for example based on a pre-determined configuration. The pre-determined configuration may be for example specific to the type of the work machine and/or the capabilities of the second safety system 425. The work machine 420 is, as stated, in this example embodiment a drilling machine, but in some other example embodiments, the work machine may be for example any other remotely controlled work machine and/or an autonomous mobile mining vehicle such as a loader, a dumper, a load haul dump (LHD) vehicle, a rock support rig, an underground transport vehicle, or a light duty vehicle.

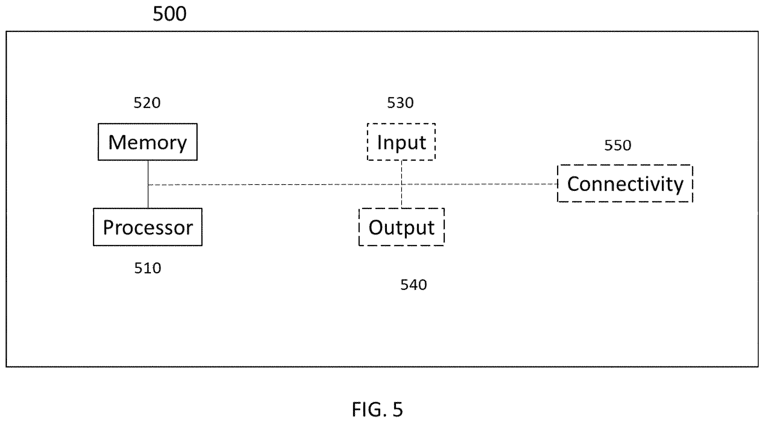

FIG. 5 illustrates an apparatus 500, which may be an apparatus comprised in another device such as a control unit comprised in a safety system, in a remote control unit or in a control unit of a work machine. The apparatus 500 comprises a processor 510. The processor 510 is configured to interpret computer program instructions and process data. The processor 510 may comprise one or more programmable processors. The processor 510 may comprise programmable hardware with embedded firmware and may, alternatively or additionally, comprise one or more application specific integrated circuits, ASICs.

The processor 510 is coupled to a memory 520. The processor is configured to read and write data to and from the memory 520. The memory 520 may comprise one or more memory units. The memory units may be volatile or non-volatile. It is to be noted that in some example embodiments there may be one or more units of non-volatile memory and one or more units of volatile memory or, alternatively, one or more units of non-volatile memory, or, alternatively, one or more units of volatile memory. Volatile memory may be for example RAM, DRAM or SDRAM. Non-volatile memory may be for example ROM, PROM, EEPROM, flash memory, optical storage or magnetic storage. In general, memories may be referred to as non-transitory computer readable media. The memory 520 stores computer readable instructions that are execute by the processor 510. For example, non-volatile memory stores the computer readable instructions and the processor 510 executes the instructions using volatile memory for temporary storage of data and/or instructions.

The computer readable instructions may have been pre-stored to the memory 520 or, alternatively or additionally, they may be received, by the apparatus, via electromagnetic carrier signal and/or may be copied from a physical entity such as computer program product. Execution of the computer readable instructions causes the apparatus 500 to perform functionality described above.

In the context of this document, a "memory" or "computer-readable media" may be any non-transitory media or means that can contain, store, communicate, propagate or transport the instructions for use by or in connection with an instruction execution system, apparatus, or device, such as a computer.

The apparatus 500 is configured to, with the at least one processor, the at least one memory and the computer program code, cause the apparatus to receive an indication, from a first safety system associated with the isolated operating area, that a safety operation is to be performed for the work machine operating in the isolated operating area. Also, the apparatus 500 is configured to, with the at least one processor, the at least one memory and the computer program code, cause the apparatus to determine, in response to receiving the indication, a status of a second safety system associated with the work machine. Also, the apparatus 500 is configured to, with the at least one processor, the at least one memory and the computer program code, cause the apparatus to determine, based on the safety operation and the status of the second safety system associated with the work machine, an adapted safety operation. Also, the apparatus 500 is configured to, with the at least one processor, the at least one memory and the computer program code, cause the apparatus to control operation of the work machine based on the adapted safety operation.

The apparatus 500 optionally further comprises, or is connected to, an input unit 530. The input unit 530 comprises one or more interfaces for receiving input such as a user input or input from another device. The one or more interfaces may comprise for example one or more motion and/or orientation sensors, one or more cameras, one or more accelerometers, one or more microphones, one or more buttons and one or more touch detection units. Further, the input unit 530 may comprise an interface to which external devices may connect to.

The apparatus 500 also comprises, optionally, an output unit 540. The output unit comprises or is connected to one or more displays capable of rendering visual content. The output unit 540 may further comprise one or more audio outputs. The one or more audio outputs may be for example loudspeakers or a set of headphones.

The apparatus 500 may further comprise, optionally, a connectivity unit 550. The connectivity unit 550 enables wired and/or wireless connectivity to external networks. The connectivity unit 550 may comprise one or more antennas and one or more receivers that may be integrated to the apparatus 500 or the apparatus 500 may be connected to. The connectivity unit 550 may comprise an integrated circuit or a set of integrated circuits that provide the wireless communication capability for the apparatus 500. Alternatively, the wireless connectivity may be a hardwired application specific integrated circuit, ASIC.

It is to be noted that the apparatus 500 may further comprise various components not illustrated in the FIG. 5. The various components may be hardware components and/or software components.

As used herein, a plurality of items, structural elements, compositional elements, and/or materials may be presented in a common list for convenience. However, these lists should be construed as though each member of the list is individually identified as a separate and unique member. In addition, various embodiments and example of the present invention may be referred to herein along with alternatives for the various components thereof. It is understood that such embodiments, examples, and alternatives are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. An apparatus (500) for controlling operation of a work machine (102, 104, 106) connected to a first safety system (410) configured to monitor safety of an isolated operating area (110, 120) and provide an indication to all the work machines within the isolated operating area to perform a safety operation, the work machine (102, 104, 106) comprising a second safety system (425) configured to monitor a pre-determined volume surrounding, at least partly, the work machine (102, 104, 106) operating in the isolated operating area (110, 120), the apparatus comprising at least one processor (510), and at least one memory (520) including a computer program code, wherein the at least one memory (520) and the computer program code are configured, with the at least one processor (510), to cause the apparatus to:
receive the indication, from the first safety system (410) associated with the isolated operating area (110, 120), that the safety operation is to be performed for the work machine (102, 104, 106) operating in the isolated operating area (110, 120);
determine, in response to receiving the indication, a status of the second safety system (425) associated with the work machine (102, 104, 106) operating in the isolated operating area (110, 120);
determine, based on the safety operation and the status of the second safety system (425) associated with the work machine (102, 104, 106), an adapted safety operation; and
control operation of the work machine (102, 104, 106) based on the adapted safety operation.

2. An apparatus according to claim 1, wherein the at least one memory (520) and the computer program code are further configured to cause the apparatus to determine that the status of the second safety system (425) is active and, based on this status, determine that the adapted safety operation comprises continued operation of the work machine (102, 104, 106).

3. An apparatus according to claim 2, wherein the operation of the work machine (102, 104, 106) is continued in a limited manner.

4. An apparatus according to claim 1, wherein the at least one memory (520) and the computer program code are further configured to cause the apparatus to determine that the status of the safety system is not active and based on this status, determine that the adapted safety operation comprises the safety operation.

5. An apparatus according to any previous claim, wherein operation of the work machine (102, 104, 106) is controlled, at least partly, remotely.

6. An apparatus according to any previous claim, wherein the safety operation comprises stopping and preventing the operation of the work machine (102, 104, 106).

7. An apparatus according to any previous claim, wherein the second safety system (425) is configured to, when its status is active, monitor for movement in the environment adjacent to the work machine (102, 104, 106).

8. An apparatus according to any previous claim, wherein the second safety system (425) is further configured to stop the operation of the work machine (102, 104, 106) if movement is detected by the second safety system (425).

9. An apparatus according to any previous claim, wherein the indication is received in response to an electronic access barrier (130, 132, 136, 138), which is comprised in the first safety system (410) and associated with the isolated operating area (110, 120), detecting movement.

10. An apparatus according to any previous claim, wherein the isolated operating area (110, 120) is comprised in a mine.

11. An apparatus according to any previous claim, wherein the work machine (102, 104, 106) is one of a rock drilling machine, mechanical cutting machine, a loader, a truck.

12. An apparatus according to any previous claim, wherein the apparatus is comprised in the work machine (102, 104, 106).

13. A method for controlling operation of a work machine (102, 104, 106) connected to a first safety system (410) configured to monitor safety of an isolated operating area (110, 120) and provide an indication to all the work machines within the isolated operating area to perform a safety operation, the work machine (102, 104, 106) comprising a second safety system (425) configured to monitor a pre-determined volume surrounding, at least partly, the work machine (102, 104, 106) operating in the isolated operating area (110, 120), the method comprising:
receiving (S1) the indication, from the first safety system (410) associated with the isolated operating area (110, 120), that the safety operation is to be performed for the work machine (102, 104, 106) operating in the isolated operating area (110, 120);
determining (S2), in response to receiving the indication, a status of the second safety system (425) associated with the work machine (102, 104, 106) operating in the isolated operating area (110, 120);
determining (S3), based on the safety operation and the status of the second safety system (425) associated with the work machine (102, 104, 106), an adapted safety operation; and
controlling (S4) operation of the work machine (102, 104, 106) based on the adapted safety operation.

14. A computer program comprising instructions for causing an apparatus controlling operation of a work machine (102, 104, 106) connected to a first safety system (410) configured to monitor safety of an isolated operating area (110, 120) and provide an indication to all the work machines within the isolated operating area to perform a safety operation, the work machine (102, 104, 106) comprising a second safety system (425) configured to monitor a pre-determined volume surrounding, at least partly, the work machine (102, 104, 106) operating in the isolated operating area (110, 120) to perform at least the following:
receive the indication, from the first safety system (410) associated with the isolated operating area (110, 120), that the safety operation is to be performed for the work machine (102, 104, 106) operating in the isolated operating area (110, 120);
determine, in response to receiving the indication, a status of the second safety system (425) associated with the work machine (102, 104, 106) operating in the isolated operating area (110, 120);
determine, based on the safety operation and the status of the second safety system (425) associated with the work machine (102, 104, 106), an adapted safety operation; and
control operation of the work machine (102, 104, 106) based on the adapted safety operation.

## Patentansprüche

1. Einrichtung (500) zum Steuern des Betriebs einer Arbeitsmaschine (102, 104, 106), die mit einem ersten Sicherheitssystem (410) verbunden ist, das so konfiguriert ist, dass es die Sicherheit eines isolierten Betriebsbereichs (110, 120) überwacht und allen Arbeitsmaschinen innerhalb des isolierten Betriebsbereichs einen Hinweis zur Durchführung eines Sicherheitsbetriebs bereitstellt, wobei die Arbeitsmaschine (102, 104, 106) ein zweites Sicherheitssystem (425) umfasst, das so konfiguriert ist, dass es ein vorbestimmtes Volumen, das die im isolierten Betriebsbereich (110, 120) arbeitende Arbeitsmaschine (102, 104, 106) zumindest teilweise umgibt, überwacht, wobei die Einrichtung zumindest einen Prozessor (510) und zumindest einen Speicher (520) mit einem Computerprogrammcode umfasst, wobei der zumindest eine Speicher (520) und der Computerprogrammcode mit dem zumindest einen Prozessor (510) so konfiguriert sind, dass sie die Einrichtung zu Folgendem veranlassen: Empfangen des Hinweises von dem ersten Sicherheitssystem (410), das dem isolierten Betriebsbereich (110, 120) zugeordnet ist, dass der Sicherheitsbetrieb für die im isolierten Betriebsbereich (110, 120) arbeitende Arbeitsmaschine (102, 104, 106) durchgeführt werden soll;
Bestimmen eines Status des zweiten Sicherheitssystems (425), das der im isolierten Betriebsbereich (110, 120) arbeitenden Arbeitsmaschine (102, 104, 106) zugeordnet ist, als Reaktion auf den Empfang des Hinweises;
Bestimmen eines angepassten Sicherheitsbetriebs auf Grundlage des Sicherheitsbetriebs und des Status des zweiten Sicherheitssystems (425), das der Arbeitsmaschine (102, 104, 106) zugeordnet ist; und
Steuern des Betriebs der Arbeitsmaschine (102, 104, 106) auf der Grundlage des angepassten Sicherheitsbetriebs.

2. Einrichtung nach Anspruch 1, wobei der mindestens eine Speicher (520) und der Computerprogrammcode ferner so konfiguriert sind, dass sie bewirken, dass die Einrichtung bestimmt, dass der Status des zweiten Sicherheitssystems (425) aktiv ist, und auf der Grundlage dieses Status bestimmt, dass der angepasste Sicherheitsbetrieb den fortgesetzten Betrieb der Arbeitsmaschine (102, 104, 106) umfasst.

3. Einrichtung nach Anspruch 2, wobei der Betrieb der Arbeitsmaschine (102, 104, 106) in begrenzter Weise fortgesetzt wird.

4. Einrichtung nach Anspruch 1, wobei der mindestens eine Speicher (520) und der Computerprogrammcode ferner so konfiguriert sind, dass sie bewirken, dass die Einrichtung bestimmt, dass der Status des Sicherheitssystems nicht aktiv ist, und auf der Grundlage dieses Status bestimmt, dass der angepasste Sicherheitsbetrieb den Sicherheitsbetrieb umfasst.

5. Einrichtung nach einem der vorhergehenden Ansprüche, wobei der Betrieb der Arbeitsmaschine (102, 104, 106) zumindest teilweise ferngesteuert wird.

6. Einrichtung nach einem vorstehenden Anspruch, wobei der Sicherheitsbetrieb das Anhalten und Verhindern des Betriebs der Arbeitsmaschine (102, 104, 106) umfasst.

7. Einrichtung nach einem vorstehenden Anspruch, wobei das zweite Sicherheitssystem (425) so konfiguriert ist, dass es im aktiven Status Bewegungen in der Umgebung neben der Arbeitsmaschine (102, 104, 106) überwacht.

8. Einrichtung nach einem vorstehenden Anspruch, wobei das zweite Sicherheitssystem (425) ferner so konfiguriert ist, dass es den Betrieb der Arbeitsmaschine (102, 104, 106) anhält, wenn das zweite Sicherheitssystem (425) eine Bewegung erkennt.

9. Einrichtung nach einem vorstehenden Anspruch, wobei der Hinweis als Reaktion auf eine elektronische Zugangsschranke (130, 132, 136, 138) empfangen wird, die in dem ersten Sicherheitssystem (410) umfasst und dem isolierten Arbeitsbereich (110, 120) zugeordnet ist, die eine Bewegung erkennt.

10. Einrichtung nach einem vorstehenden Anspruch, wobei der isolierte Arbeitsbereich (110, 120) in einem Bergwerk umfasst ist.

11. Einrichtung nach einem vorstehenden Anspruch, wobei die Arbeitsmaschine (102, 104, 106) eine Gesteinsbohrmaschine, eine mechanische Schneidemaschine, ein Lader oder ein Lastwagen ist.

12. Einrichtung nach einem vorstehenden Anspruch, wobei die Einrichtung in der Arbeitsmaschine (102, 104, 106) umfasst ist.

13. Verfahren zur Steuerung des Betriebs einer Arbeitsmaschine (102, 104, 106), die mit einem ersten Sicherheitssystem (410) verbunden ist, das zur Überwachung der Sicherheit eines isolierten Arbeitsbereichs (110, 120) und zur Bereitstellung eines Hinweises an alle Arbeitsmaschinen innerhalb des isolierten Arbeitsbereichs zur Durchführung eines Sicherheitsbetriebs konfiguriert ist, wobei die Arbeitsmaschine (102, 104, 106) ein zweites Sicherheitssystem (425) umfasst, das zur Überwachung eines vorbestimmten Volumens konfiguriert ist, das die im isolierten Arbeitsbereich (110, 120) arbeitende Arbeitsmaschine (102, 104, 106) zumindest teilweise umgibt, wobei das Verfahren Folgendes umfasst:
Empfangen (S1) des Hinweises vom ersten Sicherheitssystem (410), das dem isolierten Arbeitsbereich (110, 120) zugeordnet ist, dass der Sicherheitsbetrieb für die im isolierten Arbeitsbereich (110, 120) arbeitende Arbeitsmaschine (102, 104, 106) durchzuführen ist;
Bestimmen (S2) eines Status des zweiten Sicherheitssystems (425), das der im isolierten Betriebsbereich (110, 120) arbeitenden Arbeitsmaschine (102, 104, 106) zugeordnet ist, als Reaktion auf den Empfang des Hinweises;
Bestimmen (S3) eines angepassten Sicherheitsbetriebs auf Grundlage des Sicherheitsbetriebs und des Status des zweiten Sicherheitssystems (425), das der Arbeitsmaschine (102, 104, 106) zugeordnet ist; und
Steuern (S4) des Betriebs der Arbeitsmaschine (102, 104, 106) auf der Grundlage des angepassten Sicherheitsbetriebs.

14. Computerprogramm mit Anweisungen, die eine Einrichtung zur Steuerung des Betriebs einer Arbeitsmaschine (102, 104, 106), die mit einem ersten Sicherheitssystem (410) verbunden ist, zur Überwachung der Sicherheit eines isolierten Arbeitsbereichs (110, 120) und zur Bereitstellung eines Hinweises an alle innerhalb des isolierten Arbeitsbereichs arbeitenden Arbeitsmaschinen zur Durchführung einer Sicherheitsmaßnahme konfiguriert ist, wobei die Arbeitsmaschine (102, 104, 106) ein zweites Sicherheitssystem (425) umfasst, das zur Überwachung eines vorbestimmten Volumens konfiguriert ist, das die im isolierten Arbeitsbereich (110, 120) arbeitende Arbeitsmaschine (102, 104, 106) zumindest teilweise umgibt, um zumindest Folgendes durchzuführen:
Empfangen des Hinweises vom ersten Sicherheitssystem (410), das dem isolierten Arbeitsbereich (110, 120) zugeordnet ist, dass der Sicherheitsbetrieb für die im isolierten Arbeitsbereich (110, 120) arbeitende Arbeitsmaschine (102, 104, 106) durchzuführen ist;
Bestimmen eines Status des zweiten Sicherheitssystems (425), das der im isolierten Betriebsbereich arbeitenden Arbeitsmaschine (102, 104, 106) (110, 120) zugeordnet ist, als Reaktion auf den Empfang des Hinweises;
Bestimmen eines angepassten Sicherheitsbetriebs auf Grundlage des Sicherheitsbetriebs und des Status des zweiten Sicherheitssystems (425), das der Arbeitsmaschine (102, 104, 106) zugeordnet ist; und
Steuern des Betriebs der Arbeitsmaschine (102, 104, 106) auf der Grundlage des angepassten Sicherheitsbetriebs.

## Revendications

1. Appareil (500) pour la commande du fonctionnement d'une machine de travail (102, 104, 106) reliée à un premier système de sécurité (410) configuré pour surveiller la sécurité d'une zone de travail isolée (110, 120) et fournir une indication à toutes les machines de travail de la zone de travail isolée selon laquelle **il** faut effectuer une opération de sécurité, la machine de travail (102, 104, 106) comprenant un second système de sécurité (425) configuré pour surveiller un volume prédéterminé entourant, au moins partiellement, la machine de travail (102, 104, 106) fonctionnant dans la zone de travail isolée (110, 120), l'appareil comprenant au moins un processeur (510) et au moins une mémoire (520) incluant un code de programme informatique, dans lequel la au moins une mémoire (520) et le code de programme informatique sont configurés, avec le au moins un processeur (510), pour amener l'appareil à : recevoir l'indication, du premier système de sécurité (410) associé à la zone de travail isolée (110, 120), selon laquelle l'opération de sécurité doit être effectuée pour la machine de travail (102, 104, 106) fonctionnant dans la zone de travail isolée (110, 120) ;
déterminer, en réponse à la réception de l'indication, un état du second système de sécurité (425) associé à la machine de travail (102, 104, 106) fonctionnant dans la zone de travail isolée (110, 120) ;
déterminer, sur la base de l'opération de sécurité et de l'état du second système de sécurité (425) associé à la machine de travail (102, 104, 106), une opération de sécurité adaptée ; et
commander le fonctionnement de la machine de travail (102, 104, 106) sur la base de l'opération de sécurité adaptée.

2. Appareil selon la revendication 1, dans lequel la au moins une mémoire (520) et le code de programme informatique sont en outre configurés pour amener l'appareil à déterminer que l'état du second système de sécurité (425) est actif et, sur la base de cet état, déterminer que l'opération de sécurité adaptée comprend le fonctionnement continu de la machine de travail (102, 104, 106).

3. Appareil selon la revendication 2, dans lequel le fonctionnement de la machine de travail (102, 104, 106) est poursuivi de manière limitée.

4. Appareil selon la revendication 1, dans lequel la au moins une mémoire (520) et le code de programme informatique sont en outre configurés pour amener l'appareil à déterminer que l'état du système de sécurité n'est pas actif et, sur la base de cet état, déterminer que l'opération de sécurité adaptée comprend l'opération de sécurité.

5. Appareil selon une quelconque revendication précédente, dans lequel le fonctionnement de la machine de travail (102, 104, 106) est commandé, au moins partiellement, à distance.

6. Appareil selon une quelconque revendication précédente, dans lequel l'opération de sécurité comprend l'arrêt et l'empêchement du fonctionnement de la machine de travail (102, 104, 106).

7. Appareil selon une quelconque revendication précédente, dans lequel le second système de sécurité (425) est configuré pour, lorsque son état est actif, surveiller les mouvements dans l'environnement adjacent à la machine de travail (102, 104, 106).

8. Appareil selon une quelconque revendication précédente, dans lequel le second système de sécurité (425) est en outre configuré pour arrêter le fonctionnement de la machine de travail (102, 104, 106) si un mouvement est détecté par le second système de sécurité (425).

9. Appareil selon une quelconque revendication précédente, dans lequel l'indication est reçue en réponse à une barrière d'accès électronique (130, 132, 136, 138), qui est comprise dans le premier système de sécurité (410) et associée à la zone de travail isolée (110, 120), détectant le mouvement.

10. Appareil selon une quelconque revendication précédente, dans lequel la zone de travail isolée (110, 120) est comprise dans une mine.

11. Appareil selon une quelconque revendication précédente, dans lequel la machine de travail (102, 104, 106) est l'une parmi une machine de forage de roche, une machine de découpe mécanique, une chargeuse, un camion.

12. Appareil selon une quelconque revendication précédente, dans lequel l'appareil est compris dans la machine de travail (102, 104, 106).

13. Procédé de commande du fonctionnement d'une machine de travail (102, 104, 106) reliée à un premier système de sécurité (410) configuré pour surveiller la sécurité d'une zone de travail isolée (110, 120) et fournir une indication à toutes les machines de travail de la zone de travail isolée selon laquelle il faut effectuer une opération de sécurité, la machine de travail (102, 104, 106) comprenant un second système de sécurité (425) configuré pour surveiller un volume prédéterminé entourant, au moins partiellement, la machine de travail (102, 104, 106) fonctionnant dans la zone de travail isolée (110, 120), le procédé comprenant :
la réception (S1) de l'indication, du premier système de sécurité (410) associé à la zone de travail isolée (110, 120), selon laquelle l'opération de sécurité doit être effectuée pour la machine de travail (102, 104, 106) fonctionnant dans la zone de travail isolée (110, 120) ;
la détermination (S2), en réponse à la réception de l'indication, d'un état du second système de sécurité (425) associé à la machine de travail (102, 104, 106) fonctionnant dans la zone de travail isolée (110, 120) ;
la détermination (S3), sur la base de l'opération de sécurité et de l'état du second système de sécurité (425) associé à la machine de travail (102, 104, 106), d'une opération de sécurité adaptée ; et
la commande (S4) du fonctionnement de la machine de travail (102, 104, 106) sur la base de l'opération de sécurité adaptée.

14. Programme informatique comprenant des instructions pour amener un appareil commandant le fonctionnement d'une machine de travail (102, 104, 106) reliée à un premier système de sécurité (410) configuré pour surveiller la sécurité d'une zone de travail isolée (110, 120) et fournir une indication à toutes les machines de travail de la zone de travail isolée selon laquelle il faut effectuer une opération de sécurité, la machine de travail (102, 104, 106) comprenant un second système de sécurité (425) configuré pour surveiller un volume prédéterminé entourant, au moins partiellement, la machine de travail (102, 104, 106) fonctionnant dans la zone de travail isolée (110, 120), à effectuer au moins les étapes suivantes :
la réception de l'indication, du premier système de sécurité (410) associé à la zone de travail isolée (110, 120), selon laquelle l'opération de sécurité doit être effectuée pour la machine de travail (102, 104, 106) fonctionnant dans la zone de travail isolée (110, 120) ;
la détermination, en réponse à la réception de l'indication, d'un état du second système de sécurité (425) associé à la machine de travail (102, 104, 106) fonctionnant dans la zone de travail isolée (110, 120) ;
la détermination, sur la base de l'opération de sécurité et de l'état du second système de sécurité (425) associé à la machine de travail (102, 104, 106), d'une opération de sécurité adaptée ; et
la commande du fonctionnement de la machine de travail (102, 104, 106) sur la base de l'opération de sécurité adaptée.
